# EUROPÄISCHE PATENTSCHRIFT

(11) **EP 0 919 010 B1**
(45) Veröffentlichungstag und Bekanntmachung des Hinweises auf die Patenterteilung: **21.11.2001**
(21) Anmeldenummer: 97937542.5
(22) Anmeldetag: 01.08.1997
(51) Int. Cl.: G02B 27/22, G03B 35/00

(54) **HOLOGRAPHISCHES GROSSBILD-ERZEUGUNGSSYSTEM**
HOLOGRAPHIC SYSTEM FOR LARGE IMAGE PRODUCTION
SYSTEME HOLOGRAPHIQUE DE PRODUCTION DE GRANDES IMAGES

(30) Priorität: 06.08.1996 DE 19631695
(43) Veröffentlichungstag der Anmeldung: 02.06.1999
(73) Patentinhaber: Roggatz, Konstantin, 24351 Damp (DE)
(72) Erfinder: Roggatz, Konstantin, 24351 Damp (DE)
(74) Vertreter: Glaeser, Joachim, Dipl.-Ing.
(86) Internationale Anmeldenummer: EP9704194
(87) Internationale Veröffentlichungsnummer: WO9805993

(56) Entgegenhaltungen:
- US-A- 3 706 486
- US-A- 4 732 453
- DAVIES N ET AL: "DESIGN AND ANALYSIS OF AN IMAGE TRANSFER SYSTEM USING MICROLENS ARRAYS" OPTICAL ENGINEERING, Bd. 33, Nr. 11, 1.November 1994, Seiten 3624-3633, XP000475106

## Beschreibung

Die Erfindung betrifft ein Verfahren zur Erzeugung eines holoraphischen Grossbildes eines Gegenstandes, umfassend eine Mehrzahl horizontal nebeneinander und vertikal übereinander rasterartig angeordneter Bildprojektoren sowie eine Vorrichtung zur Durchführung dieses Verfahrens. Die Erfindung betrifft weiterhin eine Vorrichtung und ein Verfahren, durch welche dreidimensionale virtuelle Objekte vor einer Leinwand dargestellt werden, die ohne Zuhilfenahme einer besonderen Brille von verschiedenen Winkeln aus betrachtet werden können. Diese sind besonders für grossflächige und lichtstarke Projektionen für Werbung und Unterhaltung geeignet.

Es sind Verfahren der holographischen Bilderzeugung bekannt. Bei der Stereographie werden zwei Bilder leicht versetzt aufgenommen oder errechnet. Diese müssen dem jeweiligen Auge des Betrachters getrennt zugeführt werden. Der Betrachter muss durch eine Bildtrennungs-Apparatur oder -Brille schauen, wobei der Betrachtungswinkel nicht verändert werden kann.

Bei der Laser-Holographie wird eine Fotoplatte mit dem am Objekt reflektierten Laserstrahl und dem zuvor gesplitteten Referenzstrahl blichtet. Das entwickelte Hologramm hat jedoch nur eine begrenzte Farbvielfacht, es ist problematisch, grossflächige Projektionen herzustellen und weit aus dem Bild ragende Objekte sind nicht zu realisieren. Da die Bildauflösung gut ist, ist dieses Verfahren nur für kleinere Bilder geeignet.

Bei der Zylinder-Linsen-Platte-Holographie wird ein Bild durch die Zylinder-Linsen-Platte in vertikale Streifen zerlegt. So werden Bilder von verschiedenen Blickwinkeln des Objektes auf normales Bildpapier gebracht und können von diesen Blickwinkeln aus wieder erfasst werden. Es ergibt sich jedoch nur ein einachsiges Weitwinkelhologramm. Das Herausragen von Objekten, die Lichtstärke und die Auflösung sind außerdem noch problematisch.

Aufgabe der Erfindung ist es, eine Vorrichtung mit dem dazugehörigen Verfahren zu schaffen, großflächige räumliche Objekte weit vor einer Bildfläche mit starker Leuchtkraft dreidimensional und voll weitwinkelholographisch zu projezieren. Diese sollen unter anderem zur Werbung und Unterhaltung dienen.

Diese Aufgabe wird durch die in den Ansprüchen angegebenen Merkmale gelöst.

Das Grundprinzip der sogenannten Integral-Fotografie ist seit Anfang des Jahrhunderts bekannt, doch ist es in Vergessenheit geraten, weil die technischen Problem nicht hinreichend gelöst wurden. Beispiele für solche Systeme sind in den Dokumenten D1 (US, 4 732 453, A) und D2 (US, 3 706 486, A) zu finden. Das Grundprinzip der Integralfotographie besteht darin, dass eine Vielzahl von dicht übereinander und nebeneinander angeordneter Einzelbild-Kameras auf einer Wand montiert ein dreidimensionales Motiv so aufnehmen können, dass es bei der Wiedergabe räumlich wahrgenommen werden kann. Dafür müssen die Kameras nur klein genug sein, aber dabei das Gesamtbild aus der jeweiligen Position so präzise wie möglich in sich aufnehmen, beibehalten und bei der Wiedergabe so exakt wie möglich wie kleine Diaprojektoren wieder projizieren. Betrachtet man eine solche Projektions-Bildwand, so schaut man in eine Vielzahl winziger Diaprojektoren, die ihre jeweiligen 2D-Bilder für den Betrachter in ein großes 3D-Bild verschmelzen.

Die Kombiantion aus Kamera und Diaprojektor zur Aufnahme und Wiedergabe eines einzigen Bildes muss vor allem besonders preiswert herzustellen sein. Am besten sind hunderte solcher Projektoren in Platten zusammengefasst. Andererseits muss das von ihr aufgenommene Bild besonders gut sein, um am Ende eine akzeptable 3D-Bildauflösung zu bekommen. Die Lichtquelle für die Projektion ist relativ teuer und muss auf tausende von Projetoren aufgeteilt werden. Das Bildmodul besteht aus verschiedenen unter Druck gegossenen Glasprismen und Glasplatten mit Linsen- und Prismen-Profilen. Diese sind auf verschiedenste Weise mit Spiegelschichten, Fotoschichten und Entspiegelungs-Schichten beschichtet und aneinander gekittet. Die Hohlräume sind zum Teil mit transparenten oder schwarzen Flüssigkeiten gefüllt.

Die Funktionsweise eines einzelnen Miniprojektors wird in drei Stufen (Aufnahme, Entwicklung und Wiedergabe) erklärt.

Bei der Bildaufnahme wird ein vor dem Bildmodul befindliches Objekt oder das Bild eines Bildschirmes auf die fotoempfindliche Bildschale im Inneren des Projektors abgebildet. Die hinter der Fotoschicht weiterlaufenden Strahlen werden von einer schwarzen Flüssigkeit verschluckt, die bei der Aufnahme zwischen den hinteren Linsenplatten gefüllt wird.

Das Öffnen und Schliessen der Blende geschieht ausserhalb des Bildmoduls. Wird das Modul von einem Computer im Belichtungsautomaten belichtet, so befindet sich das Modul stets in lichtsicheren Kammern. Der Belichter wirft Licht nur auf den jeweils zu belichtenden Miniprojektor.

Werden die Module im Studio mit echten Objekten belichtet, so werden sie unter Lichtausschluss zu einer Wand montiert und durch Öffnen einer grossen Trennwand alle gemeinsam belichtet.

Um eine optimale Abbildung auf der Fotoschicht zu erlangen, müssen die Grösse und die Position der Blende, der Krümmungsradius und der Brechungsindex der vorderen Linse, sowie die Form der Abbildungs-Schale genau aufeinander abgestimmt werden, um den geometrischen Öffnungsfehler, den durch Beugung bedingten Blendenfehler sowie den Astigmatismus und die Bildfeldwölbung auszugleichen. Bei Modulen, die nur zur Computerbelichtung bestimmt sind, muss die Abbildungsschale der Entfernung des Belichtungsbildschirmes angepasst werden.

Ist das Modul fertig belichtet, so werden die fotobeschichteten Abbildungsschalen über die Zwischenräume im Diapositiv-Verfahren entwickelt. Ausserdem werden optische Flüssigkeiten entleert und zugeführt.

Bei der Wiedergabe werden die Miniprojektoren von hinten mir parallel gerichtetem Licht durchleuchtet. Dafür eignet sich Laserlicht am besten. Die Parallelität ist wichtig für die Bildschärfe. Um das Licht auf alle Projektoren gleichzeitig genau senkrecht einfallen zu lassen, wird ein starker Lichtstrahl durch einen Schacht geführt, an dem regelmässig teilspiegelnde Schichten einen Bruchteil des Strahles genau senkrecht zur Seite reflektieren. Der Hauptstrahl wird dabei jedesmal etwas schwächer.

Der senkrecht reflektierte Strahl trifft auf die hintere asphärische Linse des Projektors. Diese ist so ausgerichet, dass sie alle von hinten kommenden parallelen Strahlen genau auf die Blendenöffnungen fokussiert. Auf dem Weg dahin treffen die Strahlen auf die Bildschale, auf der die Diapositiv-Schicht diejenigen Farben bestimmt, die durchgelassen werden. Bei dem Durchstrahlen dieser Schicht fächert sich der jeweilige Strahl durch Lichtbrechung zu einem Kegel auf.

Dieses kann bei Laserlicht zu Interferenzen führen. Der Kegel wird jedoch beim Austritt aus der vorderen Linse wieder parallelgerichtet, so dass diese Interferenzen entschärft werden. Die vordere Glasplatte mit den Prismen dient dazu, das Blickfeld der einzelnen Projektoren abwechselnd 20 Grad nach rechts oder links und 20 Grad nach unten auszurichten. Dadurch wird ein optimales Betrachtungsfeld erzeugt.

Die Erfindung wird anhand der Zeichnung beispielsweise erläutert.

Die Figuren 1 und 2 zeigen schematische Darstellungen der Vorrichtung gemäss der Erfindung.

Fig. 3 ist eine schaubildliche Darstellung des Prismenrasters zur vorliegenden Erfindung.

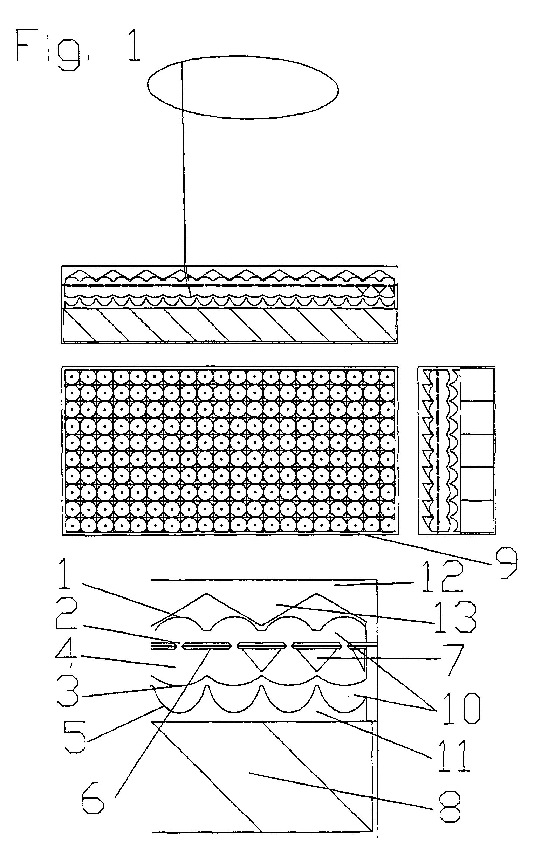

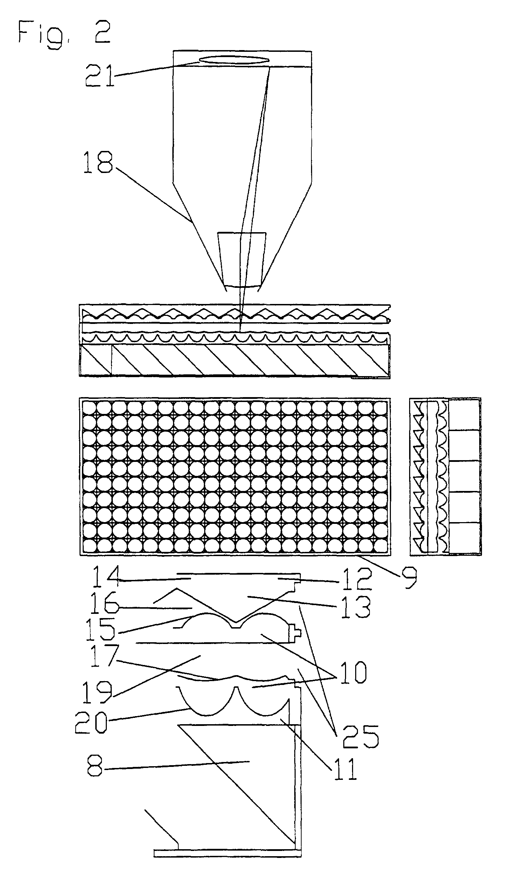

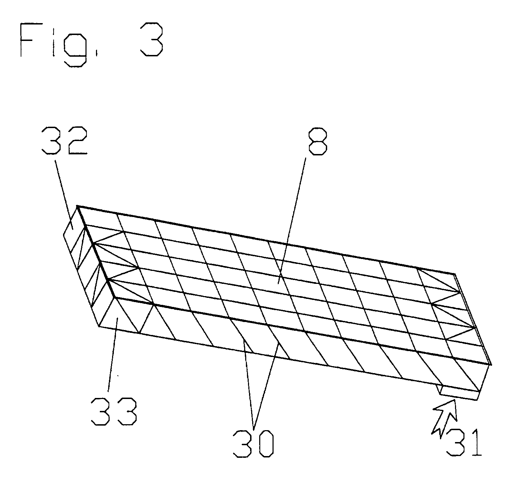

In Fig. 1 ist die Vorderansicht der Projektorwand zu erkennenn. Es ist sodann die Draufsicht und die Seitenansicht zu erkennen, das gleiche gilt im übrigen auch für die Fig. 2. Die in den Figuren verwendeten Bezugszahlen haben die folgende Bedeutung:
- 1: spährische Linsen.
- 2: Blende mit einer Mehrzahl von Blendenöffnungen
- 3: eine fotobeschichtete Abbildungsfläche,
- 4: ein Hohlraum zwischen Abbildungsfläche 3 und Blende,
- 5: asphärische Linsen,
- 6: dient zur Darstellung des Schliessmechanismus für die Blendenöffnungen 2,
- 7: sind Magnete an den Blenden, die über nicht gezeigte Elektromagnete von aussen her betätigt werden können,
- 8: zeigt schematisch ein Prismensystem zur Umleitung des Lichtes, so dass die asphärischen Linsen 5 bzw. die Abbildungsflächen 3 von hinten her bestrahlt werden,
- 9: sind die optischen Module,
- 10: sind Linsenplatten,
- 11: bezieht sich auf das Prismensystem und
- 12: sind optische Platten,
- 13: sind Umlenkprismen, mit
- 14: ist eine Schutzscheibe bezeichnet,
- 15: ist die Linsenoberfläche,
- 16: ist der Hohlraum zwischen Schutzscheibe und Linsenoberfläche,
- 17: ist die Abbildungsfläche,
- 19: der Hohlraum zwischen der Abbildungsfläche und der
- 20: Linsenoberfläche 20
- 21: ist ein Bildschirm bzw. zeiqt ein Bild und
- 18: ist ein Aufnahmeprojektor.

- Fig. 3: zeigt mit 30 das Rastersystem 8.
Bei 31 ist der Eingang der Lichtquelle zu erkennen. Mit 32 und 33 sind Prismen mit teilspiegelnden Schichten bezeichnet.

## Patentansprüche

1. Verfahren zur Erzeugung eines holographischen Großbildes eines Gegenstandes, umfassend eine Mehrzahl horizontal nebeneinander und vertikal übereinander rasterartig angeordneter Bildprojektoren, dadurch gekennkzeichnet, dass in jedem einzelnen Projektor eine Blende (2), mindestens von einer Abbildungsfläche (3) und einer Linsenoberfläche (1) gebildeter Zwischenraum (4) zur Ausfüllung eines flüssigen optischen Mediums, eine fotobeschichtete gekrümmte Abbildungsfläche (31) und mindestens eine der Linsenoberflächen (1) so angeordnet werden, dass ein Bild von einem davor liegenden Objekt auf die Abbildungsfläche (3) gebracht oder mit einem computer-generierten Bild belichtet wird, dass bei entsprechender Anordnung der oben beschriebenen Elemente und Teilung in Aufnahme- und Wiedergabeprojektor jede Abbildungsfläche einzeln mit einem vom Computer ausgerechneten perspektivischen und an die Optik angepassten Bild belichtet wird, dass die fotobeschichteten Abbildungsflächen (3) über einen Zugang entwickelt werden, dass die Projektoren mit parallelem Licht von hinten bestrahlt werden (8), dass Zwischenräume mit optischen Medien gefüllt oder entleert werden und weitere Linsenoberflächen (5) so angeordnet werden, dass sie von hinten kommendes paralleles Licht bündeln oder streuen, um das Bild auf der Abbildungsfläche (3) zu durchstrahlen und in den Raum zu projizieren.

2. Vorrichtung zur Erzeugung eines holographischen Großbildes eines Gegenstandes, umfassend eine Mehrzahl horizontal nebeneinander und vertikal übereinander rasterartig angeordneter Bildprojektoren, dadurch gekennkzeichnet, dass in jedem einzelnen Projektor eine Blende (2), mindestens von einer Abbildungsfläche (3) und einer Linsenoberfläche (1) gebildeter Zwischenraum (4) zur Ausfüllung eines flüssigen optischen Mediums, eine fotobeschichtete gekrümmte Abbildungsfläche (31) und mindestens eine der Linsenoberflächen (1) ein Bild von einem davor liegenden Objekt auf die Abbildungsfläche (3) oder ein computer-generierten Bild erzeugend angeordnet sind, dass bei entsprechender Anordnung der oben beschriebenen Elemente und Teilung in Aufnahme- und Wiedergabeprojektor jede Abbildungsfläche einzeln ein vom Computer ausgerechnetes perspektivisch und an die Optik angepasstes Bild erhält, dass ein Zugang für die fotobeschichteten Abbildungsflächen (3) vorgesehen ist, dass paralleles Licht von hinten her auf die Projektoren fällt, dass die Zwischenräume mit optischen Medien befüllbar oder entleerbar sind und weitere Linsenoberflächen (5) so angeordnet sind, dass sie von hinten kommendes paralleles Licht bündeln oder streuen, um das Bild auf der Abbildungsfläche (3) zu durchstrahlen und in den Raum zu projizieren.

3. Vorrichtung nach Anspruch 2, **dadurch gekennzeichnet, dass** die Fotoschicht im Projektor durch ein Mini-LCD ersetzt wird, der von einem auf dem Modul befindlichen Minicomputer eingestellt wird und gegebenenfalls die Einstellung selbständig beibehält, dass ein perspektivisch korrektes Bild mit dem Computer errechnet wird und der Computer mit den Computern der Nachbarmodule arbeitsmässig verbunden ist.

4. Vorrichtung nach Anspruch 2, **dadurch gekennzeichnet, dass** jeder Einzelprojektor vorn eine sphärische Linsenoberfläche aufweist (1), dass eine Blende hinter der Linse plaziert ist (2), dass hinter der Blende die gewölbte Abbildungsfläche entsprechend der idealen Abbildungsschale des optischen Systems aus einer Glasschicht geformt und fotobeschichtet ist, dass zwischen Blende und Abbildungsfläche ein Hohlraum (4) ist, der mit einer Flüssigkeit gefüllt werden kann, und dass hinter der Abbildungsfläche eine asphärische Linsenoberfläche angebracht ist (5), die paralleles von hinten kommendes Licht genau auf die Blendenöffnung (2) fokussiert.

5. Vorrichtung nach Anspruch 4, **dadurch gekennzeichnet, dass** eine Blendenplatte vor den Blenden (2) durch seitliches Verschieben die Blenden alle zusammen öffnet bzw. schliesst, dass diese Platte mit Federn auf die Blenden und zur Seite gedrückt wird, und dass durch an einer Seite der Platte angebrachte Magneten (7) die Platten von außen durch einen Elektromagneten verschiebbar sind.

6. Vorrichtung nach Anspruch 2, **dadurch gekennzeichnet, dass** jeder Einzelprojektor vorn eine Schutzscheibe (14) aufweist, hinter der eine vordere sphärische Linsenoberfläche (15) plaziert ist, dass zwischen Scheibe und Linse ein Hohlraum (16) ist, der nur zur Aufnahme mit einem flüssigen optischen Medium gefüllt wird, dass eine gewölbte Abbildungsfläche (17) entsprechend den optischen Eigenschaften des Aufnahmeprojektors (18) und der vorderen Linsenoberfläche auf einer Glasschicht geformt und fotobeschichtet ist, dass zwischen Linse und Abbildungsfläche der Hohlraum (19) mit einer Flüssigkeit gefüllt werden kann, dass hinter der Abbildungsfläche eine asphärische Linsenoberfläche (20) angebracht ist, die paralleles von hinten kommendes Licht auf einen Punkt bündelt und nach vorn projiziert, dass zur Aufnahme der Aufnahmeprojektor (18) von einem Computer präzise gesteuert und die Abbildungsfläche (17) mit einem perspektivisch berechneten und der Optik angepassten Bild (21) belichtet wird, und dass der Bildschirm (21) im Aufnahmeprojektor gekrümmt ist, um der Abbildung eine stärkere Krümmung zu geben.

7. Vorrichtung nach einem der Ansprüche 2 bis 6, **dadurch gekennzeichnet, dass** jeder der erwähnten Einzel-Miniprojektoren durch ein Prismen-Rastersystem (8) von hinten mit parallel gerichtetem Licht durchstrahlt wird.

8. Vorrichtung nach Anspruch 7, **dadurch gekennzeichnet, dass** durch Verkittung von rautenförmigen Prismen (30) mit einem optischen Medium mit geringerer Brechzahl sowie durch Auftragen von voll- oder teilspiegelnden Schichten das Licht einer starken Quelle (31) relativ gleichmäßig auf alle Raster-Quadrate verteilt wird, indem an jeder verkitteten Schnittfläche ein Bruchteil des Lichtstrahles um 90° nach vorn reflektiert wird, und dass der Lichtstrom das System ein zweites Mal in Gegenrichtung durchfließt, wenn er bei der letzten Zelle (32) angekommen ist.

9. Vorrichtung nach einem der Ansprüche 7 oder 8, **dadurch gekennzeichnet, dass** Prismazellen (32, 33) am Rande des Prismen-Rasters (8) den Hauptlichtstrom um 90° in einer Ebene umleiten und gleichzeitig den abgeteilten schwächeren Lichtstrom um 90° in einer anderen Ebene zur ersten Ebene senkrecht umleiten, indem das Prisma zweimal diagonal geschitten wird und die vier Teile wieder zusammengekittet werden, und indem an den vier Schneideflächen sowie an den Außenflächen voll- und teilspiegelnde Schichten (33) aufgetragen werden.

10. Vorrichtung nach einem der Ansprüche 2 bis 9, **dadurch gekennzeichnet, dass** die Einzel-Miniprojektoren in rechteckigen Modulen (9) von beispielsweise 10x20 cm zusammengefasst sind, dass die Linsen in Linsenplatten (10) zusammengefasst sind, die mit Haltestegen zwischen den Linsen verkittet werden, dass verschliessbare Öffnungen (25) Zugang zum inneren Zwischenraum verschaffen, um die Fotoentwicklungs-Chemikalien oder optischen Medien eingießen zu können.

11. Vorrichtung nach einem der Ansprüche 2 bis 10, **dadurch gekennzeichnet, dass** der Hohlraum zwischen der asphärischen Linsenoberfläche (20) und dem Prismen-System (11) vor der Entwicklung mit einer undurchsichtigen dunklen Flüssigkeit gefüllt wird, um störende Reflexionen während der Belichtung zu vermeiden.

12. Vorrichtung nach einem der Ansprüche 2 bis 11, **dadurch gekennzeichnet, dass** auf der Vorderseite des Moduls eine optische Platte (12) angeordnet ist, die vor jede Linse ein Umlenkprisma (13) setzt, dass abwechselnde Prisma-Umlenkungen nach rechts und links sowie nach unten ein optimales Sichtfeld ausrichten, und dass die Prismen an einer Seite eine leichte Krümmung aufweisen, um eine leichte Verzerrung auszugleichen.

13. Vorrichtung nach einem der Ansprüche 2 bis 12, **dadurch gekennzeichnet, dass** die Farben Rot, Grün und Blau immer abwechselnd einem separaten Miniprojektor durch Farbfilter zugeteilt werden, und dass die Abbildungsflächen, die Linsen sowie die Fotobeschichtungen optimal den jeweiligen Wellenlängen angepaßt sind.

14. Vorrichtung nach einem der Ansprüche 2 bis 13, **dadurch gekennzeichnet, dass** jeder Miniprojektor das gesamte Farbspektrum aufnimmt und dass die Abbildungsflächen, die Linsen sowie die Fotobeschichtungen auf alle Wellenlängen angepasst sind.

15. Vorrichtung nach einem der Ansprüche 2 bis 14, **dadurch gekennzeichnet, dass** vor jedem Einzelprojektor eine Linsenplatte mit mehreren Linsen angebracht ist, um die Punkt-Auflösung zu erhöhen.

16. Vorrichtung nach einem der Ansprüche 2 bis 15 zur Erzeugung eines perspektivisch umgestülpten (pseudokopischen) Bildes eines Gegenstandes, umfassend eine Mehrzahl horizontal nebeneinander und vertikal übereinander rasterartig zu einer Filterwand angeordneter Einzel-Umleitkörper, **dadurch gekennzeichnet, dass** ein solcher Umleitkörper aus einem Glaskörper besteht, in dem zwei sich senkrecht durchschneidende Spiegelflächen eingelassen sind, wobei diese Flächen senkrecht zur Filterwand stehen und im Schnittpunkt mit einer Blendöffnung versehen sind.

17. Vorrichtung nach Anspruch 16, **dadurch gekennzeichnet, dass** die Filterwandscheibe so zwischen zwei Scheiben mit Schmiermittel hochkant aufgehängt wird, dass sie leicht beweglich ist, um die Auflösung bei einer Aufnahme zu steigern.

18. Vorrichtung nach einem der Ansprüche 2 bis 17, **dadurch gekennzeichnet, dass** die Abbildungsfläche ein Spiegel ist, auf dem die Fotoschicht aufgebracht ist, dass bei der Wiedergabe eine starke Lichtquelle von schräg vorn auf die Spiegel strahlt, um die Bilder auf der Spieloberfläche in den Raum zu projizieren, und dass bei der Aufnahme durch eine Einzelpunktbelichtung der Computer das Bild unter Berücksichtigung der Position der Widergabelichtquelle berechnet.

19. Vorrichtung nach Anspruch 10, **dadurch gekennzeichnet, dass** als Belichtungsautomat aus einem Reservoir Bildmodule automatisch entnommen werden, dass diese auf eine Präzisionsschiene gelegt werden und automatisch von einem Computer vor das Objektiv eines großen Belichtungsbildschirmes gesteuert werden, dass der Computer das Bild errechnet, die Projektorblende öffnet und schließt und mit dem nächsten Miniprojektor fortfährt.

20. Vorrichtung nach Anspruch 10, **dadurch gekennzeichnet, dass** als Entwicklungsautomat aus einem Reservoir unentwickelte Bildmodule automatisch entnommen werden und unter Lichtausschluß entwickelt werden, dass dabei die flüssigen Medien im Modul entsprechend entleert und gefüllt werden und nacheinander die Entwicklungschemikalien und Spülungen eingeführt werden, die Module versiegelt, als entwickelt markiert und in das Reservoir geschoben werden, um dann mit dem nächsten Modul fortzufahren.

21. Vorrichtung nach einem der Ansprüche 2 bis 20, **dadurch gekennzeichnet, dass** die vorderen Linsenoberflächen zur Bündelung der einfallenden Objektstrahlen sowie die hinteren asphärischen Linsenoberflächen zur Bündelung des von hinten kommenden Projektionslichtes zwei oder mehr Linsen bilden, die so in ihrer Form und ihrem Brechungsindex beschaffen sind, dass sie den Farbfehler, Öffnungsfehler und weitere Abbildungsfehler weitgehend korrigieren.

22. Verfahren nach Anspruch 1 zur Speicherung mehrerer Bilder auf den einzelnen Abbildungsflächen und zur Wiedergabe einer kurzen zyklischen Bewegungssequenz der Gesamtbildszene, **dadurch gekennzeichnet, dass** die Abbildungsfläche mit einer Vielzahl von unterschiedlichen Fotoschichten beschichtet ist, dass jeweils drei Schichten (RBG) für ein einzelnes Bild bei der Aufnahme belichtet und bei der Wiedergabe ausgelesen werden, ohne die anderen Schichten zu belichten oder auszulesen, und dass die einzelnen Schichten von außen durch die Eigenschaft des Lichtes oder anderen Signalen zur Sensibilisierung oder Auslesung gebracht werden.

23. Verfahren nach Anspruch 22, **dadurch gekennzeichnet, dass** jede der vielen Fotoschichten nur auf ein schmales jeweils verschiedenes Wellenlängen-Spektrum mit hoher Trennschärfe fotoempfindlich reagiert, dass bei einer dreifachen RGB-getrennten Belichtung eines Einzelbildes nur jeweils diejenigen Wellenlängen eingesetzt werden, auf die die zu dem Bild zugeordneten Schichten reagieren, dass bei der Fotoentwicklung die auf eine bestimmte Wellenlänge reagierende Fotoschicht eine Einfärbung bekommt, die auch genau diese Wellenlänge mit großer Trennschärfe absorbiert, und dass bei der Wiedergabe die Wand mit RGB-Komponenten durchleuchtet wird, die in ihrer Wellenlänge dem jeweils darzustellenden Bild entsprechen.

## Claims

1. Method for producing a holographic large image of an object, comprising a plurality of image projectors arranged in a raster next to one another horizontally and above one another vertically, **characterized in that** in each individual projector a diaphragm (2), at least one interspace (4), formed by an imaging surface (3) and a lens surface (1), for filling up with a liquid optical medium, a photocoated curved imaging surface (31) and at least one of the lens surfaces (1) are arranged such that an image of an object situated therebefore is brought onto the imaging surface (3) or is exposed with a computer-generated image, **in that**, given an appropriate arrangement of the above-described elements and division into a recording and reproducing projector, each imaging surface is exposed individually with a perspective image which is calculated by the computer and adapted to the optical system, **in that** the photocoated imaging surfaces (3) are developed via an access, **in that** the projectors are irradiated (8) from behind with parallel light, and **in that** interspaces are filled with optical media or emptied and further lens surfaces (5) are arranged such that they focus or scatter parallel light coming from behind in order to transirradiate the image on the imaging surface (3) and to project it into space.

2. Device for producing a holographic large image of an object, comprising a plurality of image projectors arranged in a raster next to one another horizontally and above one another vertically, **characterized in that** in each individual projector a diaphragm (2), at least one interspace (4), formed by an imaging surface (3) and a lens surface (1), for filling up with a liquid optical medium, a photocoated curved imaging surface (31) and at least one of the lens surfaces (1) are arranged in a fashion producing an image of an object situated therebefore on the imaging surface (3), or producing a computer-generated image, **in that**, given an appropriate arrangement of the above-described elements and division into a recording and reproducing projector, each imaging surface individually obtains a perspective image which is calculated by the computer and adapted to the optical system, **in that** access is provided for the photocoated imaging surfaces (3), **in that** parallel light falls from behind onto the projectors, and **in that** the interspaces can be filled with optical media or can be emptied and further lens surfaces (5) are arranged such that they focus or scatter parallel light coming from behind in order to transirradiate the image on the imaging surface (3) and to project it into space.

3. Device according to Claim 2, **characterized in that** the photolayer is replaced in the projector by a mini LCD which is adjusted by a mini computer located on the module and, if appropriate, automatically retains the adjustment, and **in that** a perspectively correct image is calculated by the computer and the computer is connected to the computers of the adjacent modules in operational terms.

4. Device according to Claim 2, **characterized in that** each individual projector has (1) a spherical lens surface at the front, **in that** a diaphragm is placed (2) behind the lens, **in that** behind the diaphragm the cambered surface is shaped from a glass layer in accordance with the ideal imaging shell of the optical system and photocoated, **in that** there is a cavity (4), which can be filled with a liquid, between the diaphragm and imaging surface, and **in that** fitted (5) behind the imaging surface is an aspherical lens surface which focuses accurately onto the diaphragm aperture (2) parallel light coming from behind.

5. Device according to Claim 4, **characterized in that** a diaphragm plate in front of the diaphragms (2) opens or closes all the diaphragms together by lateral displacement, **in that** this plate is pressed with springs onto the diaphragms and to the side, and **in that** the plates can be displaced from the outside, by an electromagnet with the aid of magnets (7) fitted on one side of the plate.

6. Device according to Claim 2, **characterized in that** each individual projector has at the front a protective disc (14) behind which a front spherical lens surface (15) is placed, **in that** between the disc and lens there is a cavity (16) which is filled only for recording with a liquid optical medium, **in that** a cambered imaging surface (17) is shaped on a glass layer in accordance with the optical properties of the recording projector (18) and the front lens surface, and is photocoated, **in that** the cavity (19) can be filled with a liquid between the lens and imaging surface, **in that** fitted behind the imaging surface is an aspherical lens surface (20) which focuses parallel light coming from behind to a point and projects it forwards, **in that** for the purpose of recording the recording projector (18) is controlled precisely by a computer and the imaging surface (17) is exposed with an image (21) which is calculated in a perspective fashion and adapted to the optical system, and **in that** the display screen (21) in the recording projector is curved in order to give the image a stronger curvature.

7. Device according to one of Claims 2 to 6, **characterized in that** each of the abovementioned individual mini projectors is transirradiated from behind with parallel-directed light through a prism/raster system (8).

8. Device according to Claim 7, **characterized in that** by cementing rhombic prisms (30) with an optical medium of relatively low refractive index, and by applying fully or partially reflecting layers, the light of a strong source (31) is distributed relatively uniformly over all raster squares by virtue of the fact that a fraction of the light beam is reflected forwards by 90° at each cemented cut surface, and **in that** the luminous flux flows through the system a second time in the opposite direction when it arrives at the last cell (32).

9. Device according to one of Claims 7 or 8, **characterized in that** prism cells (32, 33) at the edge of the prism raster (8) divert the main luminous flux by 90° in a plane and simultaneously divert the split-off weaker luminous flux by 90° in another plane at right angles to the first plane, by virtue of the fact that the prism is cut twice diagonally and the four parts are cemented together again, and by virtue of the fact that fully and partially reflecting layers (33) are applied to the four cut surfaces and to the outer surfaces.

10. Device according to one of Claims 2 to 9, **characterized in that** the individual mini projectors are combined in rectangular modules (9) of, for example, 10 x 20 cm, **in that** the lenses are combined in lens plates (10) which are cemented with holding webs between the lenses, and **in that** sealable openings (25) provide access to the internal interspace in order to be able to pour in photodevelopment chemicals or optical media.

11. Device according to one of Claims 2 to 10, **characterized in that** the cavity between the aspherical lens surface (20) and the prism system (11) is filled before development with an opaque dark liquid, in order to avoid interfering reflections during exposure.

12. Device according to one of Claims 2 to 11, **characterized in that** arranged on the front side of the module is an optical plate (12) which sets a deflecting prism (13) in front of each lens, **in that** alternating prism deflections to the right and left as well as downwards align an optimum field of view, and **in that** on one side the prisms have a slight curvature in order to compensate a slight distortion.

13. Device according to one of Claims 2 to 12, **characterized in that** the colours red, green and blue are allocated in a continuously changing fashion to a separate mini projector by colour filters, and **in that** the imaging surfaces, the lenses and the photocoatings are optimally adapted to the respective wavelengths.

14. Device according to one of Claims 2 to 13, **characterized in that** each mini projector records the entire colour spectrum, and **in that** the imaging surfaces, the lenses and the photocoatings adapt to all wavelengths.

15. Device according to one of Claims 2 to 14, **characterized in that** a lens plate with a plurality of lenses is fitted in front of each individual projector in order to increase the punctiform resolution.

16. Device according to one of Claims 2 to 15 for producing a perspectively reversed (pseudoscopic) image of an object, comprising a plurality of individual diverting bodies arranged in a raster next to one another horizontally and above one another vertically to form a filter wall, **characterized in that** such a diverting body comprises a glass body in which two reflecting surfaces intersecting one another at right angles are recessed, the surfaces being perpendicular to the filter wall and being provided with a diaphragm aperture at the point of intersection.

17. Device according to Claim 16, **characterized in that** the filter wall disc is suspended edgewise with lubricant between two discs such that it can easily be moved in order to enhance the resolution when recording.

18. Device according to one of Claims 2 to 17, **characterized in that** the imaging surface is a mirror to which the photolayer is applied, **in that** during reproduction a strong light source radiates onto the mirror from obliquely ahead, in order to project the images on the mirror surface into space, and **in that** during recording by the exposure of individual points the computer calculates the image by taking account of the position of the reproducing light source.

19. Device according to Claim 10, **characterized in that** as automatic exposure unit image modules are automatically extracted from a reservoir, **in that** these are laid on a precision rail and automatically moved by a computer to in front of the lens of a large exposure display screen, and **in that** the computer calculates the image, opens and closes the projector diaphragm and continues with the next mini projector.

20. Device according to Claim 10, **characterized in that** as automatic development unit undeveloped image modules are automatically extracted from a reservoir and developed with the exclusion of light, and **in that** in the process the liquid media in the module are appropriately emptied and filled, and the development chemicals and rinses are introduced one after another, the modules are sealed, marked as developed and pushed into the reservoir in order then to continue with the next module.

21. Device according to one of Claims 2 to 20, **characterized in that** the front lens surfaces for focusing the incident object beams, and the rear aspherical lens surfaces for focusing the projection light coming from behind form two or more lenses which are constituted as to their shape and their refractive index such that they largely correct the chromatic aberration, spherical aberration and further aberrations.

22. Method according to Claim 1 for storing a plurality of images on the individual imaging surfaces and for reproducing a short cyclical movement sequence of the overall image scene, **characterized in that** the imaging surface is coated with a multiplicity of different photolayers, **in that** in each case three layers (RBG) are exposed for an individual image during recording and read out during reproduction without the other layers being exposed or read out, and **in that** the individual layers are sensitized or read out from outside by the property of the light or other signals.

23. Method according to Claim 22, **characterized in that** each of the many photolayers reacts with a high selectivity only to a narrow, in each case different wavelength spectrum, **in that** in the case of a three-fold RGB-separated exposure of an individual image use is made in each case only of those wavelengths to which the layers assigned to the image react, **in that** during the photodevelopment the photolayer reacting to a specific wavelength is dyed, the dye also absorbing precisely this wavelength with high selectivity, and **in that** during reproduction the wall is transilluminated with RGB components whose wavelength corresponds to the image respectively to be displayed.

## Revendications

1. Procédé pour la génération d'une image holographique grand format d'un objet, comprenant une pluralité de projecteurs d'image disposés en matrice horizontalement l'un à côté de l'autre et verticalement l'un au-dessus de l'autre, **caractérisé en ce que** dans chaque projecteur individuel un diaphragme (2), un espace à remplir avec un milieu optique liquide (4) formé au moins par un plan de représentation (3) et une surface de lentille (1), un plan de représentation (31) courbe à couchage photographique et au moins l'une des surfaces de lentilles (1) sont disposés de telle sorte qu'une image d'un objet situé devant eux soit amenée sur le plan de représentation (3) ou exposée avec une image générée par ordinateur, **en ce qu'**avec une disposition adéquate des éléments décrits ci-dessus et une séparation en projecteur de prise de vue et projecteur de reproduction, chaque plan de représentation est exposé individuellement avec une image en perspective calculée par l'ordinateur et adaptée à l'optique, **en ce que** les plans de représentation (3) à couchage photographique sont développés à travers un accès, **en ce que** les projecteurs sont irradiés de derrière (8) avec une lumière parallèle, **en ce que** des espaces de milieux optiques sont remplis ou vidés et des surfaces de lentilles (5) supplémentaires sont disposées de telle sorte qu'elles focalisent ou dispersent la lumière parallèle venant de derrière pour traverser l'image sur le plan de représentation (3) et la projeter dans l'espace.

2. Dispositif pour la génération d'une image holographique grand format d'un objet, comprenant une pluralité de projecteurs d'image disposés en matrice horizontalement l'un à côté de l'autre et verticalement l'un au-dessus de l'autre, **caractérisé en ce que** dans chaque projecteur individuel, un diaphragme (2), un espace (4) à remplir avec un milieu optique liquide formé au moins par un plan de représentation (3) et une surface de lentille (1), un plan de représentation courbe (31) à couchage photographique et au moins l'une des surfaces de lentilles (1) sont disposés de sorte qu'ils génèrent une image d'un objet situé devant eux sur le plan de représentation (3) ou une image générée par ordinateur, **en ce qu'**avec une disposition adéquate des éléments décrits ci-dessus et une séparation en projecteur de prise de vue et projecteur de reproduction, chaque plan de représentation reçoit individuellement une image en perspective calculée par l'ordinateur et adaptée à l'optique, **en ce qu'**un accès aux plans de représentation (3) à couchage photographique est prévu, **en ce que** de la lumière parallèle est incidente de derrière sur les projecteurs, **en ce que** les espaces peuvent être remplis ou vidés avec des milieux optiques, et des surfaces de lentilles (5) supplémentaires sont disposées de telle sorte qu'elles focalisent ou dispersent la lumière parallèle venant de derrière, afin de traverser l'image sur le plan de représentation (3) et la projeter dans l'espace.

3. Dispositif selon la revendication 2, **caractérisé en ce que** la couche photographique dans le projecteur est remplacée par un écran LCD miniature qui est réglé par un mini-ordinateur situé sur le module et maintient le réglage éventuellement de façon autonome, **en ce qu'**une image de perspective correcte est calculée par l'ordinateur et l'ordinateur est relié de façon opérationnelle avec les ordinateurs des modules adjacents.

4. Dispositif selon la revendication 2, **caractérisé en ce que** chaque projecteur individuel présente à l'avant une surface de lentille sphérique (1), **en ce qu'**un diaphragme est placé derrière la lentille (2), **en ce que** derrière le diaphragme, le plan de représentation bombé est formé à partir d'une couche de verre selon la coque de représentation idéale du système optique et dispose d'un couchage photographique, **en ce qu'**entre le diaphragme et le plan de représentation il y a un espace creux (4) qui peut être rempli avec un liquide, et **en ce que** derrière le plan de représentation une surface de lentille asphérique est disposée (5) qui focalise une lumière parallèle venant de derrière exactement sur l'ouverture de diaphragme (2).

5. Dispositif selon la revendication 4, **caractérisé en ce qu'**une plaque de diaphragme devant les diaphragmes (2) ouvre ou ferme tous les diaphragmes en même temps par un décalage latéral, **en ce que** cette plaque est poussée par des ressorts sur les diaphragmes et vers le côté, et **en ce que** des aimants (7) montés sur un côté de la plaque font que les plaques peuvent être déplacées de l'extérieur par un électro-aimant.

6. Dispositif selon la revendication 2, **caractérisé en ce que** chaque projecteur individuel présente à l'avant un disque de protection (14) derrière lequel est placée une surface de lentille (15) sphérique avant, **en ce qu'**entre le disque et la lentille il y a un espace creux (16) qui est rempli avec un milieu optique liquide uniquement pour la prise de vue, **en ce qu'**un plan de représentation courbe (17) est formé sur une couche de verre selon les propriétés optiques du projecteur de prise de vue (18) et de la surface de lentille avant et dispose d'un couchage photographique, **en ce qu'**entre la lentille et le plan de représentation, l'espace creux (19) peut être rempli avec un liquide, **en ce que** derrière le plan de représentation, une surface de lentille asphérique (20) est disposée qui focalise une lumière parallèle venant de derrière en un point et la projette vers l'avant, **en ce que** pour la prise de vue, le projecteur de prise de vue (18) est piloté précisément par un ordinateur et le plan de représentation (17) est exposé avec une image (21) calculée en perspective et adaptée à l'optique, et **en ce que** l'écran (21) dans le projecteur de prise de vue est incurvé pour donner une courbure plus forte à la représentation.

7. Dispositif selon l'une quelconque des revendications 2 à 6, **caractérisé en ce que** chacun desdits projecteurs miniature individuels est traversé de derrière par une lumière orientée parallèlement à travers un système matriciel de prismes (8).

8. Dispositif selon la revendication 7, **caractérisé en ce que**, par le collage de prismes en losange (30) avec un milieu optique ayant un indice de réfraction faible ainsi que par l'application de couches entièrement ou partiellement spéculaires, la lumière d'une forte source (31) est répartie de façon relativement uniforme sur tous les carrés de la matrice **en ce qu'**à chaque plan de section collé, une fraction du rayon lumineux est réfléchi sur 90° vers l'avant, et **en ce que** le flux de lumière passe par le système une deuxième fois dans le sens opposé lorsqu'il a atteint la dernière cellule (32).

9. Dispositif selon l'une quelconque des revendications 7 ou 8, **caractérisé en ce que** des cellules de prisme (32, 33) au bord de la matrice de prismes (8) détournent le flux de lumière principal sur 90° dans un plan et détournent en même temps le flux de lumière plus faible séparé sur 90° dans un autre plan, de façon perpendiculaire au premier plan, **en ce que** le prisme est découpé deux fois de façon diagonale et les quatre parties sont recollées, et **en ce que** des couches entièrement ou partiellement spéculaires (33) sont appliquées sur les quatre plans de section ainsi que sur les faces extérieures.

10. Dispositif selon l'une quelconque des revendications 2 à 9, **caractérisé en ce que** les projecteurs miniatures individuels sont regroupés dans des modules rectangulaires (9) par exemple de 10 x 20 cm, **en ce que** les lentilles sont regroupées dans des plaques de lentilles (10) qui sont collées avec des barrettes de support entre les lentilles, **en ce que** des orifices refermables (25) donnent accès à l'espace intérieur pour permettre le versement des produits chimiques de développement photo ou de milieux optiques.

11. Dispositif selon l'une quelconque des revendications 2 à 10, **caractérisé en ce que** l'espace creux entre la surface de lentille asphérique (20) et le système de prismes (11) est rempli avant le développement avec un liquide sombre non transparent afin d'éviter des réflexions gênantes pendant l'exposition.

12. Dispositif selon l'une quelconque des revendications 2 à 11, **caractérisé en ce que** sur la face avant du module, une plaque optique (12) est disposée qui place un prisme déflecteur (13) devant chaque lentille, **en ce que** des déflexions de prisme alternantes vers la droite et vers la gauche ainsi que vers le bas alignent un champ de vision optimal, et **en ce que** les prismes présentent une légère courbure d'un côté pour compenser une légère déformation.

13. Dispositif selon l'une quelconque des revendications 2 à 12, **caractérisé en ce que** les couleurs rouge, vert et bleu sont attribuées toujours en alternance à un projecteur miniature séparé par des filtres de couleur, et **en ce que** les plans de représentation, les lentilles ainsi que les couchages photographiques sont adaptés de façon optimale aux longueurs d'onde respectives.

14. Dispositif selon l'une quelconque des revendications 2 à 13, **caractérisé en ce que** chaque projecteur miniature enregistre tout le spectre de couleurs, et **en ce que** les plans de représentation, les lentilles ainsi que les couchages photographiques sont adaptés à toutes les longueurs d'onde.

15. Dispositif selon l'une quelconque des revendications 2 à 14, **caractérisé en ce qu'**une plaque de lentilles avec plusieurs lentilles est fixée devant chaque projecteur individuel pour augmenter la résolution ponctuelle.

16. Dispositif selon l'une quelconque des revendications 2 à 15 pour la génération d'une image retournée en perspective (pseudoscopique) d'un objet, comprenant une pluralité de corps déflecteurs individuels disposés en matrice, horizontalement l'un à côté de l'autre et verticalement l'un au-dessus de l'autre, formant un mur de filtres, **caractérisé en ce que** ledit corps déflecteur se compose d'un corps en verre dans lequel sont insérées deux surfaces de miroir qui se coupent verticalement, ces surfaces se trouvant verticalement par rapport au mur de filtres et disposant d'une ouverture de diaphragme au point d'intersection.

17. Dispositif selon la revendication 16, **caractérisé en ce que** le disque de mur de filtres est suspendu debout entre deux disques avec un produit lubrifiant de sorte qu'il est facilement mobile pour augmenter la résolution lors d'une prise de vue.

18. Dispositif selon l'une quelconque des revendications 2 à 17, **caractérisé en ce que** le plan de représentation est un miroir sur lequel la couche photographique est appliquée, **en ce que** lors de la reproduction, une forte source de lumière irradie obliquement depuis l'avant sur le miroir pour projeter les images sur la surface de miroir dans l'espace, et **en ce que** lors de la prise de vue par une exposition d'un point individuel, l'ordinateur calcule l'image en tenant compte de la position de la source de lumière de reproduction.

19. Dispositif selon la revendication 10, **caractérisé en ce que** pour le contrôleur d'exposition, des modules d'image sont prélevés automatiquement à partir d'un réservoir, **en ce que** ceux-ci sont posés sur un rail de précision et amenés automatiquement par un ordinateur devant l'objectif d'un grand écran d'exposition, **en ce que** l'ordinateur calcule l'image, ouvre et ferme le diaphragme du projecteur et continue avec le projecteur miniature suivant.

20. Dispositif selon la revendication 10, **caractérisé en ce que** pour le contrôleur de développement, des modules d'image non développés sont prélevés automatiquement à partir d'un réservoir et développés en excluant la lumière, **en ce que** les milieux liquides dans le module sont alors vidés et remplis de façon adéquate et les produits chimiques de développement et les produits de rinçage sont introduits successivement, les modules sont scellés et marqués comme développés et mis dans le réservoir pour continuer ensuite avec le module suivant.

21. Dispositif selon l'une quelconque des revendications 2 à 20, **caractérisé en ce que** les surfaces de lentilles avant pour la focalisation des rayons d'objet incidents ainsi que les surfaces de lentille asphériques arrière pour la focalisation de la lumière de projection venant de derrière forment deux ou plusieurs lentilles qui ont une forme et un indice de réfraction tels qu'elles corrigent largement l'erreur de couleur, l'erreur d'ouverture et d'autres erreurs de représentation.

22. Procédé selon la revendication 1 pour la mémorisation de plusieurs images sur les plans de représentation individuels et pour la reproduction d'une courte séquence animée cyclique de la scène vidéo globale, **caractérisé en ce que** le plan de représentation est traité avec une pluralité de différentes couches photographiques, **en ce que** respectivement trois couches (RGB) sont exposées pour une image individuelle lors de la prise de vue et extraites lors de la reproduction, sans exposer ou extraire les autres couches, et **en ce que** les couches individuelles sont amenées à la sensibilisation ou l'extraction depuis l'extérieur par la propriété de la lumière ou d'autres signaux.

23. Procédé selon la revendication 22, **caractérisé en ce que** chacune des nombreuses couches photographiques réagit de façon photosensible uniquement à un spectre de longueurs d'onde étroit, respectivement différent, avec une haute sélectivité, **en ce que** lors d'une exposition triple séparée en RGB d'une image individuelle, seules sont respectivement utilisées les longueurs d'onde auxquelles réagissent les couches affectées à l'image, **en ce que** lors du développement photographique la couche photographique réagissant à une certaine longueur d'onde reçoit une coloration qui absorbe également exactement cette longueur d'onde avec une haute sélectivité, et **en ce que** lors de la reproduction, le mur est traversé par les composantes RGB qui correspondent au niveau de leur longueur d'onde à l'image à représenter respectivement.
